# EUROPEAN PATENT SPECIFICATION

(11) **EP 4 530 829 B1**
(45) Date of publication and mention of the grant of the patent: **21.01.2026**
(21) Application number: 24197004.5
(22) Date of filing: 28.08.2024
(51) Int. Cl.: G06F 8/41

(54) **METHOD AND SYSTEM FOR PERFORMING OUTER LOOP ABSTRACTION FOR EFFICIENT VERIFICATION OF REACTIVE SYSTEMS**
VERFAHREN UND SYSTEM ZUR DURCHFÜHRUNG EINER ABSTRAKTION EINER ÄUSSERER SCHLEIFE ZUR EFFIZIENTEN VERIFIZIERUNG REAKTIVER SYSTEME
PROCÉDÉ ET SYSTÈME POUR EFFECTUER UNE ABSTRACTION DE BOUCLE EXTERNE POUR UNE VÉRIFICATION EFFICACE DE SYSTÈMES RÉACTIFS

(30) Priority: 29.09.2023 IN 202321065633
(43) Date of publication of application: 02.04.2025
(73) Proprietor: Tata Consultancy Services Limited, Maharashtra (IN)
(72) Inventor: DARKE, PRIYANKA, 411028 Pune - Maharashtra (IN); CHIMDYALWAR, BHARTI DEWRAO, 411028 Pune - Maharashtra (IN)
(74) Representative: Goddar, Heinz J.

(56) References cited:
- US-A1- 2017 262 356
- US-A1- 2023 004 479
- BEYER DIRK ET AL: "A Unifying Approach for Control-Flow-Based Loop Abstraction", 22 September 2022, SPRINGER INTERNATIONAL PUBLISHING, PAGE(S) 3 - 19, XP047634373, DOI: 10.1007/978-3-031-17108-6_1
- DARKE PRIYANKA ET AL: "OLA: Property Directed Outer Loop Abstraction for Efficient Verification of Reactive Systems", 2023 IEEE INTERNATIONAL CONFERENCE ON SOFTWARE MAINTENANCE AND EVOLUTION (ICSME), IEEE, 1 October 2023 (2023-10-01), pages 436 - 440, XP034485856, DOI: 10.1109/ICSME58846.2023.00056

## Description

### CROSS-REFERENCE TO RELATED APPLICATIONS AND PRIORITY

The present application claims priority to Indian application no. 202321065633, filed on September 29, 2023.

### TECHNICAL FIELD

The disclosure herein generally relates to reactive system verification, and, more particularly, to a method and a system for performing outer loop abstraction for verification of reactive systems.

### BACKGROUND

Reactive systems, as the name suggests, react to environmental inputs. In particular, they read values from the environment and execute a system based on those values. Typically, reactive systems are installed to wait and act on environmental inputs for as long as the system is running. They are generally installed to interact with humans, or other sub-systems. Thus, they can be complex, large, safety-critical, and may require a rigorous formal verification. One of the examples of the reactive system can be a user interaction panel present in a car.

In order to scale verification for such systems, bounded model checking (BMC) has been successfully used in conjunction with static analysis and code abstraction methods in industry scale verification tools. These tools generally use combinations of several techniques including program slicing, loop abstractions, and function level abstractions. However, the program slicing, and loop abstraction techniques suffer in the presence of nested loops, thereby making it difficult to use it for verification of systems using/containing nested loops.

Further, to verify reactive systems with nested loops, several verification techniques use mathematical induction to perform loop abstraction. These techniques do not perform loop optimization (even if possible) before abstracting loops to verify the code. Once loop abstraction is applied, standard optimizations cannot be applied because abstraction changes the loop behavior.

Additionally, in the abstraction, the outer loop may be represented thrice in the induction- once each for the base case, induction hypothesis, and the induction check. And each instance of the outer loop may further contain three instances of the inner loop corresponding to the base case, hypothesis, and induction check of the inner loop. Hence, as the code size and the nesting depth of the loop increases, the abstractions become more complex, which hinders the model checking efficiency, and ultimately causes the verifier to run out of resources. Document (US2017/262356A1) relates generally to data structure abstraction, and more particularly to method and system for data structure abstraction for model checking. In one embodiment, the method includes identifying data structure accesses in the source code. Loops are identified in the data structure accesses, and loop-types are identified in the loops. An abstracted code is generated based on the loop types for abstracting the data structure. Abstracting the data structure includes, for each loop, replacing the data structure accesses by one of a corresponding representative element and a non-deterministic value in the loop body of said loop based on elements accessed, and eliminating loop control statement of said loop operating on elements of data structure based on loop type of said loop, and adding a plurality of non-array assignments at a start and after the loop body of the source code. The abstracted code is provided for the model checking (Abstract). Document (US2023/004479A1) discloses abstract interpretation based static analysis tools use relational/non-relational abstract domains to verify program properties. Precision and scalability of analysis vary basis usage of abstract domains. K-limited path-sensitive interval domain is an abstract domain that was conventionally proposed for analysis on industry strength programs. The domain maintains variables' intervals along a configurable K subsets of paths at each program point, which implicitly provides co-relation among variables. When the number of paths at the join point exceeds K, set of paths are partitioned into K subsets, arbitrarily, which results in loss of precision required to verify program properties. To address the above problem, embodiments of the present disclosure provide selective merging of paths in such a way that the intervals computed help verifying more properties. The selective path-sensitive method of the present disclosure is based on the knowledge of variables whose values influence the verification outcome of program properties (Abstract). Document (BEYER DIRK ET AL: "A Unifying Approach for Control-Flow-Based Loop Abstraction") discloses loop abstraction is a central technique for program analysis, because loops can cause large state-space representations if they are unfolded. It presents a framework that allows to implement different loop abstractions in one common environment, where each technique can be freely switched on and off on-the-fly during the analysis.

### SUMMARY

Embodiments of the present disclosure present technological improvements as solutions to one or more of the above-mentioned technical problems recognized by the inventors in conventional systems. For example, in one aspect, there is provided a method for performing outer loop abstraction for verification of reactive systems as defined in claim 1.

In another aspect, there is provided a system for performing outer loop abstraction for verification of reactive systems as defined in claim 6

In yet another aspect, there are provided one or more non-transitory machine-readable information storage mediums comprising one or more instructions which when executed by one or more hardware processors perform outer loop abstraction for verification of reactive systems as defined in claim 11

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is an example representation of an environment, related to at least some example embodiments of the present disclosure.
FIG. 2 illustrates an exemplary block diagram of a system for performing outer loop abstraction for verification of reactive systems, in accordance with an embodiment of the present disclosure.
FIG. 3 illustrates a schematic block diagram representation of an outer loop abstraction process performed by the system for verification of properties of a program, in accordance with an embodiment of the present disclosure.
FIGS. 4A and 4B, collectively, illustrate an exemplary flow diagram of a method for performing outer loop abstraction for verification of reactive systems, in accordance with an embodiment of the present disclosure.
FIGS. 5A, 5B, 5C and 5D, collectively, illustrate an exemplary scenario explaining working of the system, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The term "loop condition" used throughout the description refers to a part of a loop header present in a program which holds in all iterations of a loop, and does not hold after a last iteration.

The term "fixed condition" used throughout the description refers to conditions present in the program that evaluate to the same value for all iterations of the loop.

The term "initialization condition" used throughout the description refers to branching conditions present in the program which (1) hold only in a first iteration, (2) lead to an execution of a block of code before any other statements in a loop body, and (3) conditions that are checked immediately after the loop condition and before any other condition in the loop body.

The term "loop constant" used throughout the description refers to a variable that is read in the loop present in the program but never modified.

The term "environmental condition" used throughout the description refers to conditions present in a block of code that directly read environmental inputs.

The term "environmental variable" used throughout the description refers to variables present in the block of code which have direct or transitive data and control dependencies only on environmental inputs or environmental conditions.

Reactive systems, designed for embedded applications, commonly feature an outer infinite loop that captures environmental input, and the system response is decided according to the inputs. The outer infinite loop implies that almost every reactive system contains nested loops. Available verification techniques, such as model checking and loop abstraction methods, often struggle in terms of accuracy and efficiency in the presence of nested loops as these techniques apply mathematical induction to loops without performing loop optimization.

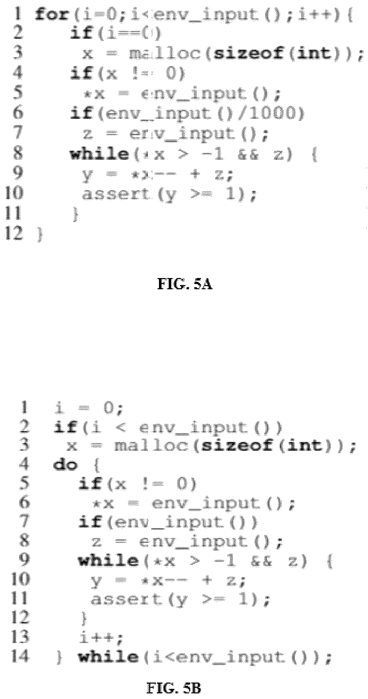

As discussed earlier, the outer loop is represented thrice in induction by verification tools - once each for the base case, induction hypothesis, and induction check. And each instance of the outer loop contains three instances of the inner loop corresponding to the base case, hypothesis, and induction check of the inner loop. Further, the hypothesis and the induction check of the outer loop can each have multiple iterations because it modifies multiple variables. So, this kind of abstraction is complex, has low accuracy, and is unnecessary, because the first iteration of the outer loop in an example presented in FIG. 5A is sufficient to analyze the property assertion. Additionally, standard optimizations cannot be applied to the loop after the abstraction. So, overall, as the code size and the nesting depth of loops increases, the abstraction performed by verification tools become more complex which hinders with the model checking efficiency, and sometimes also cause the verifier to run out of resources.

So, verification techniques that can efficiently perform verification of the reactive systems is still to be explored.

Embodiments of the present disclosure overcome the above-mentioned disadvantages by providing a method and a system for performing outer loop abstraction for verification of reactive systems. The system of the present disclosure identifies nested loops where an outer loop can be abstracted in an input program. Then, the system abstracts the identified outer loop with respect to a given property assertion, and allows all behaviors of the input program. The abstraction process performed by the system is done with respect to the property assertion, thus it may also referred as property directed outer loop abstraction (OLA). Once the system applies the OLA on the input program to generate an outer loop abstracted program, the generated outer loop abstracted program enhance the efficiency of industrial code verifiers that employ model checking for verification.

In the present disclosure, the system and the method performs outer loop abstraction (OLA) to eliminate outer loop of a nested loop present in the system, which simplifies the abstraction of nested loops, thus ensuring efficient model checking. Further, the system performs property directed abstraction which helps in selective analysis of the program, and thus reducing the overall time taken in performing the verification of the program.

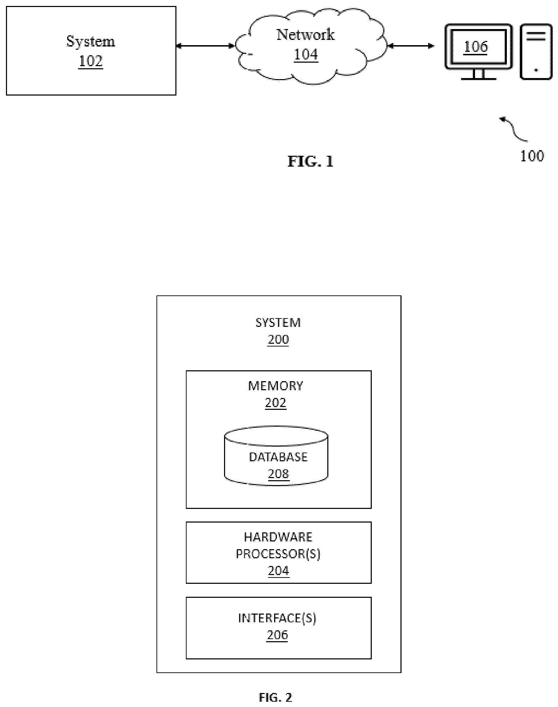

Referring now to the drawings, and more particularly to FIGS. 1 through 5D, where similar reference characters denote corresponding features consistently throughout the figures, there are shown preferred embodiments and these embodiments are described in the context of the following exemplary system and/or method.

FIG. 1 illustrates an exemplary representation of an environment 100 related to at least some example embodiments of the present disclosure. Although the environment 100 is presented in one arrangement, other embodiments may include the parts of the environment 100 (or other parts) arranged otherwise depending on, for example, performing loop optimization of a program, performing a K-path interval analysis, abstracting environmental conditions present in the program, etc. The environment 100 generally includes a system 102, an electronic device 106 (hereinafter also referred as a user device 106), each coupled to, and in communication with (and/or with access to) a network 104. It should be noted that one user device is shown for the sake of explanation; there can be more number of user devices.

The network 104 may include, without limitation, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, a virtual network, and/or another suitable public and/or private network capable of supporting communication among two or more of the parts or users illustrated in FIG. 1, or any combination thereof.

Various entities in the environment 100 may connect to the network 104 in accordance with various wired and wireless communication protocols, such as Transmission Control Protocol and Internet Protocol (TCP/IP), User Datagram Protocol (UDP), 2nd Generation (2G), 3rd Generation (3G), 4th Generation (4G), 5th Generation (5G) communication protocols, Long Term Evolution (LTE) communication protocols, or any combination thereof.

The user device 106 is associated with a user (e.g., a programmer/test engineer) who is responsible for developing/testing/verifying properties of a reactive system, such as a user interaction panel of a car etc. Examples of the user device 106 include, but are not limited to, a personal computer (PC), a mobile phone, a tablet device, a Personal Digital Assistant (PDA), a server, a voice activated assistant, a smartphone, and a laptop.

The system 102 includes one or more hardware processors and a memory. The system 102 is first configured to receive a program that is to be verified via the network 104 from the user device 106. The received program includes a nested loop i.e., a loop within one or more loops. The system 102 then performs outer loop abstraction on the received program by abstracting an outer loop that performs the following actions iteratively in a given order :1) initializing variables, 2) reading values from the environment, 3) processing values read from the environment, and 4) passing processed values to inner loops for further computations.

As variable initializations happen only in a first iteration of the outer loop, while values from the environment are read in every iteration, so the system 102 identifies if some executable statements in an outer loop body can be executed before the outer loop without changing the semantics, for instance, by moving those statements before the outer loop. Thereafter, the system 102 performs optimization of the outer loop, and abstracts the optimized outer loop *l*₀ nesting an inner loop *l* to obtain an outer loop abstracted program only if one iteration of *l*₀ is sufficient to analyze a given property assertion φ present in the inner loop *l*, and the remaining iterations can be ignored. It should be noted that abstraction of the outer loop is possible only when the property assertion φ has direct or transitive data and control dependencies only on environmental inputs read in the current iteration of *l*₀ or on variables that are never modified in *l*₀.

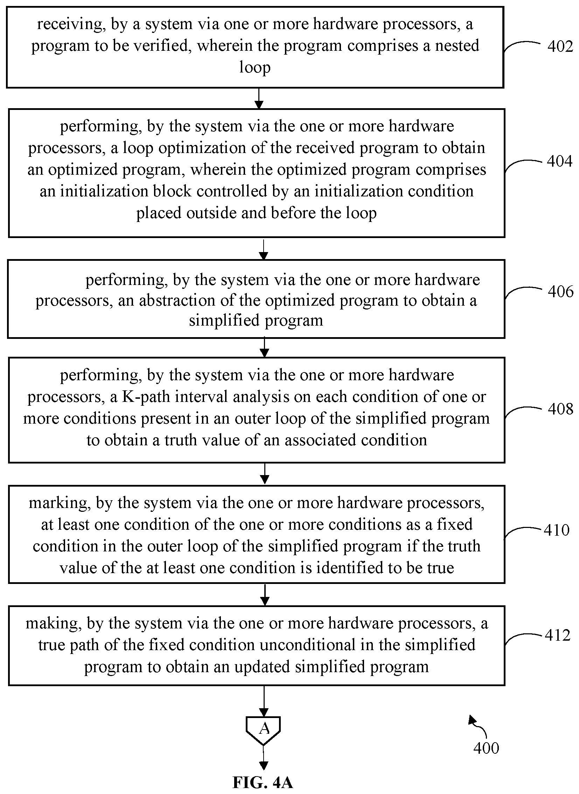

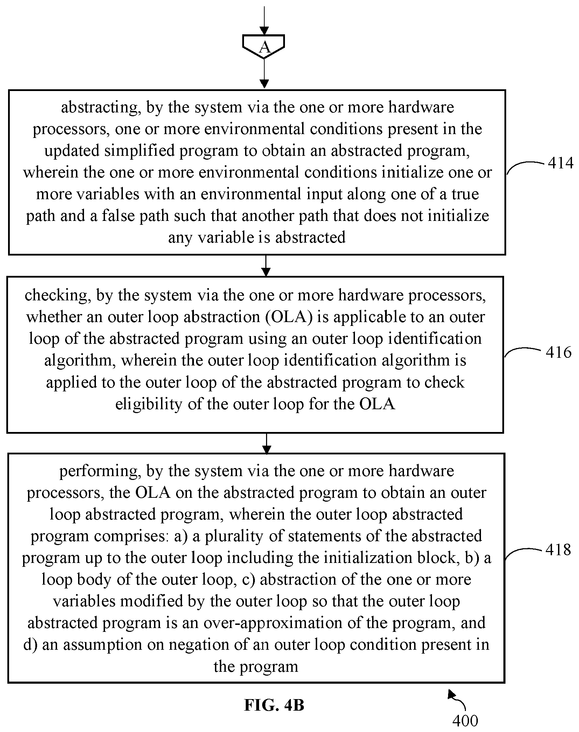

Once the outer loop abstracted program is available, the system 102 may pass the outer loop abstracted program to a program verifier for property verification. The process of performing outer loop abstraction is explained in detail with reference to FIGS. 4A and 4B.

The number and arrangement of systems, devices, and/or networks shown in FIG. 1 are provided as an example. There may be additional systems, devices, and/or networks; fewer systems, devices, and/or networks; different systems, devices, and/or networks; and/or differently arranged systems, devices, and/or networks than those shown in FIG. 1. Furthermore, two or more systems or devices shown in FIG. 1 may be implemented within a single system or device, or a single system or device shown in FIG. 1 may be implemented as multiple, distributed systems or devices. Additionally, or alternatively, a set of systems (e.g., one or more systems) or a set of devices (e.g., one or more devices) of the environment 100 may perform one or more functions described as being performed by another set of systems or another set of devices of the environment 100 (e.g., refer scenarios described above).

FIG. 2 illustrates an exemplary block diagram of the system 102 for performing outer loop abstraction for verification of reactive systems, in accordance with an embodiment of the present disclosure. The system 102 is embodied as a cloud-based and/or SaaS-based (software as a service) architecture. The system 102 may be implemented in a server system. The system 102 may be implemented in a variety of computing systems, such as laptop computers, notebooks, hand-held devices, workstations, mainframe computers, and the like.

In an embodiment, the system 102 includes one or more processors 204, communication interface device(s) or input/output (I/O) interface(s) 206, and one or more data storage devices or memory 202 operatively coupled to the one or more processors 204. The one or more processors 204 may be one or more software processing modules and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 102 can be implemented in a variety of computing systems, such as laptop computers, notebooks, hand-held devices, workstations, mainframe computers, servers, a network cloud and the like.

The I/O interface device(s) 206 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 202 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment a database 208 can be stored in the memory 202, wherein the database 208 may comprise, but are not limited to, an outer loop identification algorithm, an initialization condition identification algorithm, one or more processes and the like. The memory 202 further comprises (or may further comprise) information pertaining to input(s)/output(s) of each step performed by the systems and methods of the present disclosure. In other words, input(s) fed at each step and output(s) generated at each step are comprised in the memory 202 and can be utilized in further processing and analysis.

It is noted that the system 102 as illustrated and hereinafter described is merely illustrative of an apparatus that could benefit from embodiments of the present disclosure and, therefore, should not be taken to limit the scope of the present disclosure. It is noted that the system 102 may include fewer or more components than those depicted in FIG. 2.

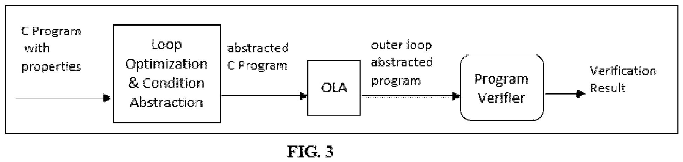

FIG. 3 illustrates a schematic block diagram representation of an outer loop abstraction process performed by the system 102 for verification of properties of a program, in accordance with an embodiment of the present disclosure.

As seen in FIG. 3, the system 102 first receives a program whose properties need to be verified. The system 102 then performs loop optimization and condition abstraction on the received program to obtain a simplified, updated simplified, and abstracted program. Thereafter, the system 102 performs an outer loop abstraction (OLA) process on the simplified, updated simplified, and abstracted program to obtain an outer loop abstracted program. Further, the system 102 shares the outer loop abstracted program with any industrial program verifier, such as ELABMC for property verification. Finally, the program verifier provides the verification result.

FIGS. 4A and 4B, collectively, with reference to FIGS. 1 to 3, represent an exemplary flow diagram of a method 400 for performing outer loop abstraction for verification of reactive systems, in accordance with an embodiment of the present disclosure. The method 400 uses the system 102 of FIGS. 1 and 2 for execution. The system 102 comprises one or more data storage devices or the memory 208 operatively coupled to the one or more hardware processors 206 and is configured to store instructions for execution of steps of the method 400 by the one or more hardware processors 206. Further, one or more steps may be grouped together and performed in form of a single step, or one step may have several sub-steps that may be performed in parallel or in sequential manner. The steps of the method of the present disclosure will now be explained with reference to the components of the system 102 as depicted in FIG. 2 and FIG. 1.

At step 402 of the present disclosure, the one or more hardware processors 206 of the system 102 receive a program to be verified. The program includes a nested loop.

At step 404 of the present disclosure, the one or more hardware processors 206 of the system 102 perform a loop optimization of the received program to obtain an optimized program. The above step can be better understood by way of the following description.

For performing the loop optimization of the received program, the system 102 optimizes a loop of the nested loop present in received program if the loop comprises of an initialization condition I. The initialization condition is identified using an initialization condition identification algorithm. The loop is optimized if it has the initialization condition. The initialization condition identification algorithm that is used to identify initialization condition is mentioned below:

```
      Procedure getInitCond(Loop l0) {
         lvar = Loop counter variable of outer loop l0
         initVal= Initial value assigned to lvar in l0
         c = first executable statement as condition in loop body l0
         if (c of form "lvar = initVal") then return c
       }
```

As per the initialization condition identification algorithm, if an outer loop counter variable '*lvar*' is initially set to '*initVal ',* and a first executable statement as condition 'c' in the outer loop checks for equality in the form of '*lvar = initVal*,' then the condition 'c' is considered as the initialization condition.

The optimized program includes an initialization block controlled by an initialization condition placed outside and before the loop. The initialization block controlled by the *I* is moved before the loop.

At step 406 of the present disclosure, the one or more hardware processors 206 of the system 102 perform an abstraction of the optimized program to obtain a simplified program. For performing abstraction of the optimized program, the system 102 assigns a non-deterministic value to each of: one or more conditions present in the outer loop of the optimized program that reads an environmental input, and one or more assignments present in the outer loop of the optimized program that reads the environmental input. The above step can be better understood by way of the following description.

The program abstraction is performed to make analysis of the property assertion easier as the abstraction changes the original input program into an abstraction which allows more behaviors than the original program. So, it allows all behaviors of the original program and some additional behaviors. Thus, in the abstraction, if the given property holds, then it also holds in the original input program. So, assignment of a non-deterministic (i.e., an arbitrarily selected value) to the conditions/assignments transforms the optimized program into a simplified program which is an abstracted program.

At step 408 of the present disclosure, the one or more hardware processors 206 of the system 102 perform a K-path interval analysis on each condition of one or more conditions that are present in the outer loop of the simplified program to obtain a truth value of a respective condition. The K-path interval analysis (a program analysis technique) is applied to the conditions present in the outer loop of the simplified program to determine the truth value of the conditions.

At step 410 of the present disclosure, the one or more hardware processors 206 of the system 102 mark at least one condition of the one or more conditions as a fixed condition in the outer loop of the simplified program if the truth value of the at least one condition is found to be true.

In case the truth value of a condition is found to be false, the system 102 removes the condition and a true path of the condition in the simplified program to obtain the updated simplified program.

At step 412 of the present disclosure, the one or more hardware processors 206 of the system 102 make a true path of the fixed condition unconditional in the simplified program to obtain an updated simplified program. The making of the true path of the fixed condition unconditional refers to removal of the fixed condition while keeping one or more statements presents in the true path of the fixed condition.

At step 414 of the present disclosure, the one or more hardware processors 206 of the system 102 abstract one or more environmental conditions present in the updated simplified program to obtain an abstracted program. The one or more environmental conditions that initialize one or more variables with an environmental input along one of a: true path and false path such that another path does not initialize any variable are abstracted.

In at least one example embodiment, the abstraction of the one or more environmental conditions includes one or more of: 1) abstraction of the one or more environmental conditions present in the updated simplified program that initializes one or more variables only with the environmental input along its true path such that its false path does not initialize any variable, 2) removal of at least one environmental condition of the one or more environmental conditions such that the initialization of the one or more variables along the true path becomes unconditional, 3) abstraction of the one or more environmental conditions present in the updated simplified program that initializes variables only with environmental inputs along its false path, such that its true path does not initialize any variable, and 4) removal of at least one environmental condition of the one or more environmental conditions so that the initialization of the one or more variables along the false path becomes unconditional.

At step 416 of the present disclosure, the one or more hardware processors 206 of the system 102 check whether an outer loop abstraction (OLA) is applicable to an outer loop of the abstracted program using an outer loop identification algorithm mentioned below:

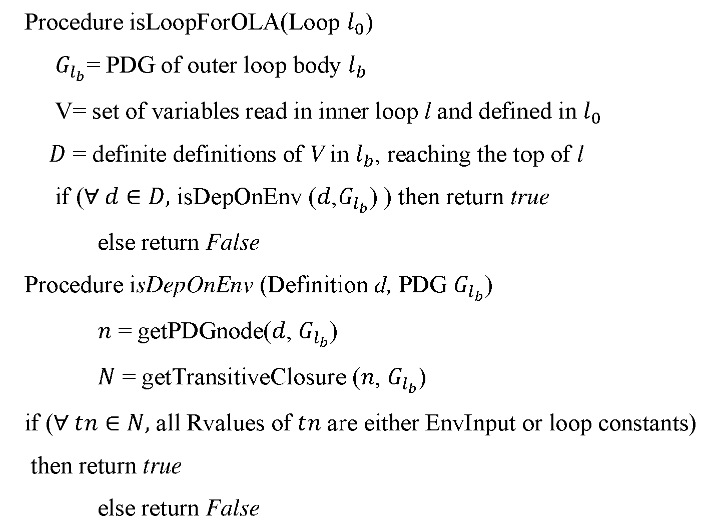

The outer loop identification algorithm is applied to the outer loop of the abstracted program to check eligibility of the outer loop for the OLA. The outer loop identification algorithm checks if variables V, read in the inner loop *l* are environmental variables by checking if the definitely reaching definitions D of variables V have an ultimate dependency on environmental input in an outer loop body *l_{b}.* The outer loop body *l_{b}* refers to a body of an outer loop present in the abstracted program without considering an outer loop condition and an inner loop body. Then, the Procedure isDepOnEnv() analyses this for a definition d, which has been obtained from the must reaching definitions analysis. The algorithm does this by transitively checking data and control dependence of d using a program dependence graph PDG *G_{l_{b}}* extracted from the PDG of the abstracted code of outer loop body *l_{b}.* Further, Procedure getPDGnode () returns the PDG node n corresponding to definition d from PDG *G_{l_{b}}*. Finally, Procedure getTransitiveClosure () returns all nodes N in the transitive closure of node *n* in the PDG *G_{l_{b}},* such that nodes *N* do not have any incoming edges. So, if the values read in the program statements corresponding to nodes N are either environmental inputs or loop constants, then definition d is ultimately dependent on the environmental input.

At step 418 of the present disclosure, the one or more hardware processors 206 of the system 102 performing the OLA on the abstracted program to obtain an outer loop abstracted program. The outer loop abstracted program includes: a) a plurality of statements of the abstracted program up to the outer loop including the initialization block, b) a loop body of the outer loop of the abstracted program, c) abstraction of the one or more variables modified by the abstracted outer loop so that abstracted program is an over-approximation of the program, and d) an assumption on negation of an outer loop condition present in the program.

In an exemplary scenario, assume a program represented in FIG. 5A is received as an input by the system 102. The program code includes a nested loop. The program code comprises an outer loop at line number 1 and a property to be verified is encoded as an assertion in an inner loop at line number 10. As can be seen in the FIG. 5A, the property assertion depends on variables *x and z read by the inner loop in line numbers 8-9. The variables*x and z are outputs of the outer loop. Variable*x is assigned an environmental input only when the variable x is non-zero in the first iteration of the outer loop (line numbers 4-5). Variable x is non-zero only when i is zero in the first iteration of the outer (line numbers 2-3). Further, it is possible to read an environmental input into variable z in every iteration of the outer loop (line number 7).

So, a loop optimization is performed on the program to ensure that statements under the initialization condition are moved outside the loop to obtain the optimized program (see, FIG. 5B). Then, the abstraction is performed on the optimized program to obtain the abstracted program. In the abstracted program, non-deterministic values are assigned to all the conditions and assignments reading environmental inputs. So, i = env_input()/1000 is replaced by i=env_input() in the abstracted program (see, FIG. 5B).

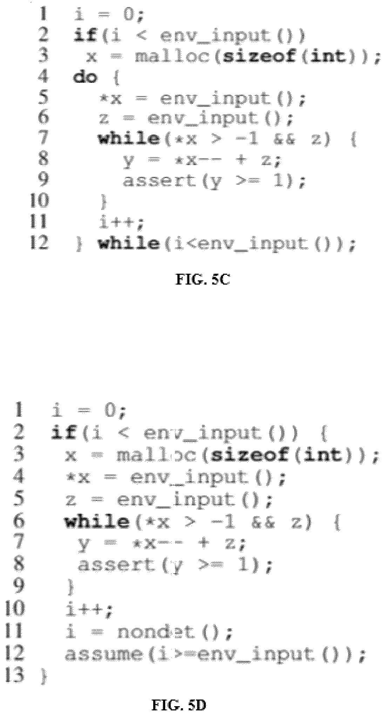

Once the abstracted program is available, a static analysis, such as k-path interval analysis is performed on a condition 'if (x! =0)' to evaluate the truth value of the condition. The truth value is found to be 'TRUE', so a TRUE path of the condition is made unconditional (see, line number 5 in FIG. 5C).

Thereafter, it is checked whether OLA can be applied, and upon determining that the OLA can be applied, the OLA is performed on the abstracted program to obtain the outer loop abstracted program (see, FIG. 5D). As can be seen in FIG. 5D, the outer loop abstracted program includes the assumption on negation of an outer loop condition present in the program (see, line numbers 11-12), along with the plurality of statements of the abstracted program up to the outer loop including the initialization block, the loop body of the abstracted outer loop, and the abstraction of the one or more variables modified by the abstracted outer loop so that outer loop abstracted program is an over-approximation of the program.

In an embodiment, once the outer loop abstracted program is available, the system 102 passes the outer loop abstracted program to a program verifier for property verification. In an embodiment, the program verifier can be any program verifier available in the art.

The written description describes the subject matter herein to enable any person skilled in the art to make and use the embodiments. The scope of the subject matter embodiments is defined by the claims.

As discussed earlier, existing loop abstraction techniques suffer in presence of nested loop, thereby making it difficult to use it for verification of systems using nested loops i.e., reactive systems. So, to overcome the disadvantages, embodiments of the present disclosure provide a method and a system for performing outer loop abstraction for verification of reactive systems. More specifically, the system and the method performs outer loop abstraction (OLA) to eliminate outer loop of a nested loop present in the system, by simplifying the program input to a model checker, thus ensuring efficient model checking. Further, the system performs property directed abstraction which helps in selective analysis of the program, and thus reducing the overall time taken in performing the verification of the program while enhancing the efficiency of industrial code verifiers that employ model checking for verification.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (400), comprising:
receiving (402), by a system via one or more hardware processors, a program to be verified that reacts to an environmental input, wherein the program comprises a nested loop, wherein the nested loop pertains to a loop within one or more loops;
performing (404), by the system via the one or more hardware processors, a loop optimization of the received program to obtain an optimized program, wherein the optimized program comprises an initialization block controlled by an initialization condition placed outside and before the loop;
performing (406), by the system via the one or more hardware processors, an abstraction of the optimized program to obtain a simplified program, wherein performing the abstraction of the optimized program comprises:
assigning, by the system via the one or more hardware processors, a non-deterministic value to each of: one or more conditions present in the outer loop of the optimized program that reads the environmental input, and one or more assignments present in the outer loop of the optimized program that reads the environmental input;
performing (408), by the system via the one or more hardware processors, a K-path interval analysis on each condition of one or more conditions present in an outer loop of the simplified program to obtain a **truth** value of an associated condition;
marking (410), by the system via the one or more hardware processors, at least one condition of the one or more conditions as a fixed condition in the outer loop of the simplified program if the truth value of the at least one condition is identified to be true;
making (412), by the system via the one or more hardware processors, a true path of the fixed condition unconditional in the simplified program to obtain an updated simplified program;
abstracting (414), by the system via the one or more hardware processors, one or more environmental conditions present in the updated simplified program to obtain an abstracted program, wherein the one or more environmental conditions initialize one or more variables with an environmental input along one of a true path and a false path such that another path that does not initialize any variable is abstracted;
checking (416), by the system via the one or more hardware processors, whether an outer loop abstraction, OLA, is applicable to an outer loop of the abstracted program using an outer loop identification algorithm, wherein the outer loop identification algorithm is applied to the outer loop of the abstracted program to check eligibility of the outer loop for the OLA, wherein the outer loop identification algorithm checks if variables *V*, read in the inner loop *l* are environmental variables by checking if a definitely reaching definitions *D* of the variables *V* have an ultimate dependency on the environmental input in an outer loop body *l_{b'}*; and
performing (418), by the system via the one or more hardware processors, the OLA on the abstracted program to obtain an outer loop abstracted program, wherein the outer loop abstracted program is passed to a program verifier for property verification, wherein the outer loop abstracted program comprises: a) a plurality of statements of the abstracted program up to the outer loop including the initialization block, b) a loop body of the outer loop of the abstracted program, c) abstraction of the one or more variables modified by the abstracted outer loop so that the outer loop abstracted program is an over-approximation of the program, and d) an assumption on negation of an outer loop condition present in the program.

2. The processor implemented method (400) as claimed in claim 1, wherein performing the loop optimization of the received program comprises:
optimizing, by the system via the one or more hardware processors, the loop of the nested loop present in the received program if the loop comprises the initialization condition, wherein the initialization condition is identified using an initialization condition identification algorithm.

3. The processor implemented method (400) as claimed in claim **1,** wherein making the true path of the fixed condition unconditional comprises of removal of the fixed condition while keeping one or more statements present in the true path of the fixed condition.

4. The processor implemented method (400) as claimed in claim **1,** comprising:
upon identifying that the truth value of the condition is false, removing, by the system via the one or more hardware processors, the condition and a true path of the condition in the simplified program to obtain the updated simplified program.

5. The processor implemented method (400) as claimed in claim **1,** wherein the abstraction of the one or more environmental conditions comprises one or more of:
1) abstraction of the one or more environmental conditions present in the updated simplified program that initializes one or more variables only with the environmental input along its true path such that its false path does not initialize any variable;
2) removal of at least one environmental condition of the one or more environmental conditions such that the initialization of the one or more variables along the true path becomes unconditional;
3) abstraction of the one or more environmental conditions present in the updated simplified program that initializes variables only with environmental inputs along its false path, such that its true path does not initialize any variable; and
4) removal of at least one environmental condition of the one or more environmental conditions so that the initialization of the one or more variables along the false path becomes unconditional.

6. A system (102), comprising:
a memory (202) storing instructions;
one or more communication interfaces (206); and
one or more hardware processors (204) coupled to the memory (202) via the one or more communication interfaces (206), wherein the one or more hardware processors (204) are configured by the instructions to:
receive a program to be verified that reacts to an environmental input, wherein the program comprises a nested loop, wherein the nested loop pertains to a loop within one or more loops;
perform a loop optimization of the received program to obtain an optimized program, wherein the optimized program comprises an initialization block controlled by an initialization condition placed outside and before the loop;
perform an abstraction of the optimized program to obtain a simplified program, wherein for performing the abstraction of the optimized program, the one or more hardware processors (204) are configured by the instructions to:
assign a non-deterministic value to each of: one or more conditions present in the outer loop of the optimized program that reads the environmental input, and one or more assignments present in the outer loop of the optimized program that reads the environmental input;
perform a K-path interval analysis on each condition of one or more conditions present in an outer loop of the simplified program to obtain a truth value of an associated condition;
mark at least one condition of the one or more conditions as a fixed condition in the outer loop of the simplified program if the truth value of the at least one condition is identified as true;
make a true path of the fixed condition unconditional in the simplified program to obtain an updated simplified program;
abstract one or more environmental conditions present in the updated simplified program to obtain an abstracted program, wherein the one or more environmental conditions initialize one or more variables with an environmental input along one of a: true path and a false path such that another path that does not initialize any variable is abstracted;
check whether an outer loop abstraction, OLA, is applicable to an outer loop of the abstracted program using an outer loop identification algorithm, wherein the outer loop identification algorithm is applied to the outer loop of the abstracted program to check eligibility of the outer loop for the OLA, wherein the outer loop identification algorithm checks if variables *V*, read in the inner loop *l* are environmental variables by checking if a definitely reaching definitions *D* of the variables *V* have an ultimate dependency on the environmental input in an outer loop body *l*_{*b*'}; and
perform the OLA on the abstracted program to obtain an outer loop abstracted program, wherein the outer loop abstracted program is passed to a program verifier for property verification, wherein the outer loop abstracted program comprises: a) a plurality of statements of the abstracted program up to the outer loop including the initialization block, b) a loop body of the outer loop of the abstracted program, c) abstraction of the one or more variables modified by the abstracted outer loop so that the outer loop abstracted program is an over-approximation of the program, and d) an assumption on negation of an outer loop condition present in the program.

7. The system (102) as claimed in claim 6, wherein for performing the loop optimization of the received program, the one or more hardware processors (204) are configured by the instructions to:
optimize the loop of the nested loop present in the received program if the loop comprises the initialization condition, wherein the initialization condition is identified using an initialization condition identification algorithm.

8. The system (102) as claimed in claim 6, wherein making the true path of the fixed condition unconditional comprises of removal of the fixed condition while keeping one or more statements present in the true path of the fixed condition.

9. The system (102) as claimed in claim 6, wherein the one or more hardware processors are configured by the instructions to:
upon identifying that the truth value of a condition is false, remove the condition and a true path of the condition in the simplified program to obtain the updated simplified program.

10. The system (102) as claimed in claim 6, wherein the abstraction of the one or more environmental conditions comprises one or more of:
1) abstraction of the one or more environmental conditions present in the updated simplified program that initializes one or more variables only with the environmental input along its true path such that its false path does not initialize any variable,
2) removal of at least one environmental condition of the one or more environmental conditions such that the initialization of the one or more variables along the true path becomes unconditional,
3) abstraction of the one or more environmental conditions present in the updated simplified program that initializes variables only with environmental inputs along its false path, such that its true path does not initialize any variable, and
4) removal of at least one environmental condition of the one or more environmental conditions so that the initialization of the one or more variables along the false path becomes unconditional.

11. One or more non-transitory machine-readable information storage mediums comprising one or more instructions which when executed by one or more hardware processors cause:
receiving, by a system, a program to be verified that reacts to an environmental input, wherein the program comprises a nested loop, wherein the nested loop pertains to a loop within one or more loops;
performing, by the system, a loop optimization of the received program to obtain an optimized program, wherein the optimized program comprises an initialization block controlled by an initialization condition placed outside and before the loop;
performing, by the system, an abstraction of the optimized program to obtain a simplified program, wherein performing the abstraction of the optimized program comprises:
assigning, by the system, a non-deterministic value to each of: one or more conditions present in the outer loop of the optimized program that reads the environmental input, and one or more assignments present in the outer loop of the optimized program that reads the environmental input;
performing, by the system, a K-path interval analysis on each condition of one or more conditions present in an outer loop of the simplified program to obtain a truth value of an associated condition;
marking, by the system, at least one condition of the one or more conditions as a fixed condition in the outer loop of the simplified program if the truth value of the at least one condition is identified to be true;
making, by the system, a true path of the fixed condition unconditional in the simplified program to obtain an updated simplified program;
abstracting, by the system, one or more environmental conditions present in the updated simplified program to obtain an abstracted program, wherein the one or more environmental conditions initialize one or more variables with an environmental input along one of a true path and a false path such that another path that does not initialize any variable is abstracted;
checking, by the system, whether an outer loop abstraction, OLA, is applicable to an outer loop of the abstracted program using an outer loop identification algorithm, wherein the outer loop identification algorithm is applied to the outer loop of the abstracted program to check eligibility of the outer loop for the OLA, wherein the outer loop identification algorithm checks if variables *V*, read in the inner loop *l* are environmental variables by checking if a definitely reaching definitions *D* of the variables *V* have an ultimate dependency on the environmental input in an outer loop body *l*_{*b*'}; and
performing, by the system, the OLA on the abstracted program to obtain an outer loop abstracted program, wherein the outer loop abstracted program is passed to a program verifier for property verification, wherein the outer loop abstracted program comprises: a) a plurality of statements of the abstracted program up to the outer loop including the initialization block, b) a loop body of the outer loop of the abstracted program, c) abstraction of the one or more variables modified by the abstracted outer loop so that the outer loop abstracted program is an over-approximation of the program, and d) an assumption on negation of an outer loop condition present in the program.

## Patentansprüche

1. Prozessorimplementiertes Verfahren (400), umfassend:
Empfangen (402), durch ein System über einen oder mehrere Hardwareprozessoren, eines zu verifizierenden Programms, das auf eine Umgebungseingabe reagiert, wobei das Programm eine verschachtelte Schleife umfasst, wobei die verschachtelte Schleife eine Schleife innerhalb einer oder mehrerer Schleifen betrifft;
Durchführen (404), durch das System über den einen oder die mehreren Hardwareprozessoren, einer Schleifenoptimierung des empfangenen Programms, um ein optimiertes Programm zu erhalten, wobei das optimierte Programm einen Initialisierungsblock umfasst, der durch eine Initialisierungsbedingung gesteuert wird, die außerhalb und vor der Schleife platziert ist;
Durchführen (406), durch das System über den einen oder die mehreren Hardwareprozessoren, einer Abstraktion des optimierten Programms, um ein vereinfachtes Programm zu erhalten, wobei das Durchführen der Abstraktion des optimierten Programms umfasst:
Zuweisen, durch das System über den einen oder die mehreren Hardwareprozessoren, eines nichtdeterministischen Werts zu jeder von: einer oder mehreren Bedingungen, die in der äußeren Schleife des optimierten Programms vorhanden sind, das die Umgebungseingabe liest, und einer oder mehreren Zuordnungen, die in der äußeren Schleife des optimierten Programms vorhanden sind, das die Umgebungseingabe liest;
Durchführen (408), durch das System über den einen oder die mehreren Hardwareprozessoren, einer K-Pfad-Intervallanalyse an jeder Bedingung von einer oder mehreren Bedingungen, die in einer äußeren Schleife des vereinfachten Programms vorhanden sind, um einen Wahrheitswert einer assoziierten Bedingung zu erhalten;
Markieren (410), durch das System über den einen oder die mehreren Hardwareprozessoren, mindestens einer Bedingung der einen oder mehreren Bedingungen als eine feste Bedingung in der äußeren Schleife des vereinfachten Programms, wenn der Wahrheitswert der mindestens einen Bedingung als wahr identifiziert wird;
Bedingungsloses Machen (412), durch das System über den einen oder die mehreren Hardwareprozessoren, eines wahren Pfads der festen Bedingung in dem vereinfachten Programm, um ein aktualisiertes vereinfachtes Programm zu erhalten;
Abstrahieren (414), durch das System über den einen oder die mehreren Hardwareprozessoren, einer oder mehrerer Umgebungsbedingungen, die in dem aktualisierten vereinfachten Programm vorhanden sind, um ein abstrahiertes Programm zu erhalten, wobei die eine oder die mehreren Umgebungsbedingungen eine oder mehrere Variablen mit einer Umgebungseingabe entlang eines von einem wahren Pfad und einem falschen Pfad initialisieren, sodass ein anderer Pfad, der keine Variable initialisiert, abstrahiert wird;
Prüfen (416), durch das System über den einen oder die mehreren Hardwareprozessoren, ob eine äußere Schleifenabstraktion, OLA, auf eine äußere Schleife des abstrahierten Programms anwendbar ist, unter Verwendung eines äußeren Schleifenidentifikationsalgorithmus, wobei der äußere Schleifenidentifikationsalgorithmus auf die äußere Schleife des abstrahierten Programms angewendet wird, um die Eignung der äußeren Schleife für die OLA zu prüfen, wobei der äußere Schleifenidentifikationsalgorithmus prüft, ob Variablen *V*, die in der inneren Schleife gelesen werden, Umgebungsvariablen sind, indem geprüft wird, ob eine definitiv erreichende Definition *D* der Variablen *V* eine endgültige Abhängigkeit von der Umgebungseingabe in einem äußeren Schleifenkörper *l*_{*b*'} aufweist; und
Durchführen (418), durch das System über den einen oder die mehreren Hardwareprozessoren, der OLA an dem abstrahierten Programm, um ein abstrahiertes Programm der äußeren Schleife zu erhalten, wobei das abstrahierte Programm der äußeren Schleife an einen Programmprüfer zur Eigenschaftsprüfung übergeben wird, wobei das abstrahierte Programm der äußeren Schleife umfasst: a) eine Mehrzahl von Aussagen des abstrahierten Programms bis zu der äußeren Schleife, die den Initialisierungsblock beinhaltet, b) einen Schleifenkörper der äußeren Schleife des abstrahierten Programms, c) Abstraktion der einen oder mehreren Variablen, die durch die abstrahierte äußere Schleife modifiziert werden, sodass das abstrahierte Programm der äußeren Schleife eine Überapproximation des Programms ist, und d) eine Annahme über Negation einer äußeren Schleifenbedingung, die in dem Programm vorhanden ist.

2. Prozessorimplementiertes Verfahren (400) nach Anspruch 1, wobei das Durchführen der Schleifenoptimierung des empfangenen Programms umfasst:
Optimieren, durch das System über den einen oder die mehreren Hardwareprozessoren, der Schleife der verschachtelten Schleife, die in dem empfangenen Programm vorhanden ist, wenn die Schleife die Initialisierungsbedingung umfasst, wobei die Initialisierungsbedingung unter Verwendung eines Initialisierungsbedingungsidentifikationsalgorithmus identifiziert wird.

3. Prozessorimplementiertes Verfahren (400) nach Anspruch 1, wobei das bedingungslose Machen des wahren Pfads der festen Bedingung das Entfernen der festen Bedingung umfasst, während eine oder mehrere Aussagen, die in dem wahren Pfad der festen Bedingung vorhanden sind, beibehalten werden.

4. Prozessorimplementiertes Verfahren (400) nach Anspruch 1, umfassend:
nach dem Identifizieren, dass der Wahrheitswert der Bedingung falsch ist, Entfernen, durch das System über den einen oder die mehreren Hardwareprozessoren, der Bedingung und eines wahren Pfads der Bedingung in dem vereinfachten Programm, um das aktualisierte vereinfachte Programm zu erhalten.

5. Prozessorimplementiertes Verfahren (400) nach Anspruch 1, wobei die Abstraktion der einen oder der mehreren Umgebungsbedingungen eines oder mehrere umfasst von:
1) Abstraktion der einen oder der mehreren Umgebungsbedingungen, die in dem aktualisierten vereinfachten Programm vorhanden sind, das eine oder mehrere Variablen nur mit der Umgebungseingabe entlang seines wahren Pfads initialisiert, sodass sein falscher Pfad keine Variable initialisiert;
2) Entfernen mindestens einer Umgebungsbedingung der einen oder der mehreren Umgebungsbedingungen, sodass die Initialisierung der einen oder der mehreren Variablen entlang des wahren Pfads bedingungslos wird;
3) Abstraktion der einen oder der mehreren Umgebungsbedingungen, die in dem aktualisierten vereinfachten Programm vorhanden sind, das Variablen nur mit Umgebungseingaben entlang seines falschen Pfads initialisiert, sodass sein wahrer Pfad keine Variable initialisiert; und
4) Entfernen mindestens einer Umgebungsbedingung der einen oder der mehreren Umgebungsbedingungen, sodass die Initialisierung der einen oder der mehreren Variablen entlang des falschen Pfads bedingungslos wird.

6. System (102), umfassend:
einen Speicher (202), der Anweisungen speichert;
eine oder mehrere Kommunikationsschnittstellen (206); und
einen oder mehrere Hardwareprozessoren (204), die über die eine oder die mehreren Kommunikationsschnittstellen (206) mit dem Speicher (202) gekoppelt sind, wobei der eine oder die mehreren Hardwareprozessoren (204) durch die Anweisungen konfiguriert sind zum:
Empfangen eines zu verifizierenden Programms, das auf eine Umgebungseingabe reagiert, wobei das Programm eine verschachtelte Schleife umfasst, wobei die verschachtelte Schleife eine Schleife innerhalb einer oder mehrerer Schleifen betrifft;
Durchführen einer Schleifenoptimierung des empfangenen Programms, um ein optimiertes Programm zu erhalten, wobei das optimierte Programm einen Initialisierungsblock umfasst, der durch eine Initialisierungsbedingung gesteuert wird, die außerhalb und vor der Schleife platziert ist;
Durchführen einer Abstraktion des optimierten Programms, um ein vereinfachtes Programm zu erhalten, wobei zum Durchführen der Abstraktion des optimierten Programms der eine oder die mehreren Hardwareprozessoren (204) durch die Anweisungen konfiguriert sind zum:
Zuweisen eines nichtdeterministischen Werts zu jeder von: einer oder mehreren Bedingungen, die in der äußeren Schleife des optimierten Programms vorhanden sind, das die Umgebungseingabe liest, und einer oder mehreren Zuordnungen, die in der äußeren Schleife des optimierten Programms vorhanden sind, das die Umgebungseingabe liest;
Durchführen einer K-Pfad-Intervallanalyse an jeder Bedingung von einer oder mehreren Bedingungen, die in einer äußeren Schleife des vereinfachten Programms vorhanden sind, um einen Wahrheitswert einer assoziierten Bedingung zu erhalten;
Markieren mindestens einer Bedingung der einen oder mehreren Bedingungen als eine feste Bedingung in der äußeren Schleife des vereinfachten Programms, wenn der Wahrheitswert der mindestens einen Bedingung als wahr identifiziert wird;
Bedingungsloses Machen eines wahren Pfads der festen Bedingung in dem vereinfachten Programm, um ein aktualisiertes vereinfachtes Programm zu erhalten;
Abstrahieren einer oder mehrerer Umgebungsbedingungen, die in dem aktualisierten vereinfachten Programm vorhanden sind, um ein abstrahiertes Programm zu erhalten, wobei die eine oder die mehreren Umgebungsbedingungen eine oder mehrere Variablen mit einer Umgebungseingabe entlang eines von einem wahren Pfad und einem falschen Pfad initialisieren, sodass ein anderer Pfad, der keine Variable initialisiert, abstrahiert wird;
Prüfen, ob eine äußere Schleifenabstraktion, OLA, auf eine äußere Schleife des abstrahierten Programms anwendbar ist, unter Verwendung eines äußeren Schleifenidentifikationsalgorithmus, wobei der äußere Schleifenidentifikationsalgorithmus auf die äußere Schleife des abstrahierten Programms angewendet wird, um die Eignung der äußeren Schleife für die OLA zu prüfen, wobei der äußere Schleifenidentifikationsalgorithmus prüft, ob Variablen *V*, die in der inneren Schleife gelesen werden, Umgebungsvariablen sind, indem geprüft wird, ob eine definitiv erreichende Definition *D* der Variablen *V* eine endgültige Abhängigkeit von der Umgebungseingabe in einem äußeren Schleifenkörper *l*_{*b*'} aufweist; und
Durchführen der OLA an dem abstrahierten Programm, um ein abstrahiertes Programm der äußeren Schleife zu erhalten, wobei das abstrahierte Programm der äußeren Schleife an einen Programmprüfer zur Eigenschaftsprüfung übergeben wird, wobei das abstrahierte Programm der äußeren Schleife umfasst: a) eine Mehrzahl von Aussagen des abstrahierten Programms bis zu der äußeren Schleife, die den Initialisierungsblock beinhaltet, b) einen Schleifenkörper der äußeren Schleife des abstrahierten Programms, c) Abstraktion der einen oder mehreren Variablen, die durch die abstrahierte äußere Schleife modifiziert werden, sodass das abstrahierte Programm der äußeren Schleife eine Überapproximation des Programms ist, und d) eine Annahme über Negation einer äußeren Schleifenbedingung, die in dem Programm vorhanden ist.

7. System (102) nach Anspruch 6, wobei zum Durchführen der Schleifenoptimierung des empfangenen Programms der eine oder die mehreren Hardwareprozessoren (204) durch die Anweisungen konfiguriert sind zum:
Optimieren der Schleife der verschachtelten Schleife, die in dem empfangenen Programm vorhanden ist, wenn die Schleife die Initialisierungsbedingung umfasst, wobei die Initialisierungsbedingung unter Verwendung eines Initialisierungsbedingungsidentifikationsalgorithmus identifiziert wird.

8. System (102) nach Anspruch 6, wobei das bedingungslose Machen des wahren Pfads der festen Bedingung das Entfernen der festen Bedingung umfasst, während eine oder mehrere Aussagen, die in dem wahren Pfad der festen Bedingung vorhanden sind, beibehalten werden.

9. System (102) nach Anspruch 6, wobei der eine oder die mehreren Hardwareprozessoren durch die Anweisungen konfiguriert sind zum:
nach dem Identifizieren, dass der Wahrheitswert einer Bedingung falsch ist, Entfernen der Bedingung und eines wahren Pfads der Bedingung in dem vereinfachten Programm, um das aktualisierte vereinfachte Programm zu erhalten.

10. System (102) nach Anspruch 6, wobei die Abstraktion der einen oder der mehreren Umgebungsbedingungen eines oder mehrere umfasst von:
1) Abstraktion der einen oder der mehreren Umgebungsbedingungen, die in dem aktualisierten vereinfachten Programm vorhanden sind, das eine oder mehrere Variablen nur mit der Umgebungseingabe entlang seines wahren Pfads initialisiert, sodass sein falscher Pfad keine Variable initialisiert,
2) Entfernen mindestens einer Umgebungsbedingung der einen oder der mehreren Umgebungsbedingungen, sodass die Initialisierung der einen oder der mehreren Variablen entlang des wahren Pfads bedingungslos wird,
3) Abstraktion der einen oder der mehreren Umgebungsbedingungen, die in dem aktualisierten vereinfachten Programm vorhanden sind, das Variablen nur mit Umgebungseingaben entlang seines falschen Pfads initialisiert, sodass sein wahrer Pfad keine Variable initialisiert, und
4) Entfernen mindestens einer Umgebungsbedingung der einen oder der mehreren Umgebungsbedingungen, sodass die Initialisierung der einen oder der mehreren Variablen entlang des falschen Pfads bedingungslos wird.

11. Ein oder mehrere nichtflüchtige maschinenlesbare Informationsspeichermedien, die eine oder mehrere Anweisungen umfassen, die bei Ausführung durch einen oder mehrere Hardwareprozessoren bewirken:
Empfangen, durch ein System, eines zu verifizierenden Programms, das auf eine Umgebungseingabe reagiert, wobei das Programm eine verschachtelte Schleife umfasst, wobei die verschachtelte Schleife eine Schleife innerhalb einer oder mehrerer Schleifen betrifft;
Durchführen, durch das System, einer Schleifenoptimierung des empfangenen Programms, um ein optimiertes Programm zu erhalten, wobei das optimierte Programm einen Initialisierungsblock umfasst, der durch eine Initialisierungsbedingung gesteuert wird, die außerhalb und vor der Schleife platziert ist;
Durchführen, durch das System, einer Abstraktion des optimierten Programms, um ein vereinfachtes Programm zu erhalten, wobei das Durchführen der Abstraktion des optimierten Programms umfasst:
Zuweisen, durch das System, eines nichtdeterministischen Werts zu jeder von: einer oder mehreren Bedingungen, die in der äußeren Schleife des optimierten Programms vorhanden sind, das die Umgebungseingabe liest, und einer oder mehreren Zuordnungen, die in der äußeren Schleife des optimierten Programms vorhanden sind, das die Umgebungseingabe liest;
Durchführen, durch das System, einer K-Pfad-Intervallanalyse an jeder Bedingung von einer oder mehreren Bedingungen, die in einer äußeren Schleife des vereinfachten Programms vorhanden sind, um einen Wahrheitswert einer assoziierten Bedingung zu erhalten;
Markieren, durch das System, mindestens einer Bedingung der einen oder mehreren Bedingungen als eine feste Bedingung in der äußeren Schleife des vereinfachten Programms, wenn der Wahrheitswert der mindestens einen Bedingung als wahr identifiziert wird;
Bedingungsloses Machen, durch das System, eines wahren Pfads der festen Bedingung in dem vereinfachten Programm, um ein aktualisiertes vereinfachtes Programm zu erhalten;
Abstrahieren, durch das System, einer oder mehrerer Umgebungsbedingungen, die in dem aktualisierten vereinfachten Programm vorhanden sind, um ein abstrahiertes Programm zu erhalten, wobei die eine oder die mehreren Umgebungsbedingungen eine oder mehrere Variablen mit einer Umgebungseingabe entlang eines von einem wahren Pfad und einem falschen Pfad initialisieren, sodass ein anderer Pfad, der keine Variable initialisiert, abstrahiert wird;
Prüfen, durch das System, ob eine äußere Schleifenabstraktion, OLA, auf eine äußere Schleife des abstrahierten Programms anwendbar ist, unter Verwendung eines äußeren Schleifenidentifikationsalgorithmus, wobei der äußere Schleifenidentifikationsalgorithmus auf die äußere Schleife des abstrahierten Programms angewendet wird, um die Eignung der äußeren Schleife für die OLA zu prüfen, wobei der äußere Schleifenidentifikationsalgorithmus prüft, ob Variablen *V*, die in der inneren Schleife gelesen werden, Umgebungsvariablen sind, indem geprüft wird, ob eine definitiv erreichende Definition *D* der Variablen *V* eine endgültige Abhängigkeit von der Umgebungseingabe in einem äußeren Schleifenkörper *l_{b'}* aufweist; und
Durchführen, durch das System, der OLA an dem abstrahierten Programm, um ein abstrahiertes Programm der äußeren Schleife zu erhalten, wobei das abstrahierte Programm der äußeren Schleife an einen Programmprüfer zur Eigenschaftsprüfung übergeben wird, wobei das abstrahierte Programm der äußeren Schleife umfasst: a) eine Mehrzahl von Aussagen des abstrahierten Programms bis zu der äußeren Schleife, die den Initialisierungsblock beinhaltet, b) einen Schleifenkörper der äußeren Schleife des abstrahierten Programms, c) Abstraktion der einen oder mehreren Variablen, die durch die abstrahierte äußere Schleife modifiziert werden, sodass das abstrahierte Programm der äußeren Schleife eine Überapproximation des Programms ist, und d) eine Annahme über Negation einer äußeren Schleifenbedingung, die in dem Programm vorhanden ist.

## Revendications

1. Procédé mis en œuvre par processeur (400), comprenant :
la réception (402), par un système via un ou plusieurs processeurs matériels, d'un programme à vérifier qui réagit à une entrée environnementale, dans lequel le programme comprend une boucle imbriquée, dans lequel la boucle imbriquée se rapporte à une boucle dans une ou plusieurs boucles ;
l'exécution (404), par le système via les un ou plusieurs processeurs matériels, d'une optimisation de boucle du programme reçu pour obtenir un programme optimisé, dans lequel le programme optimisé comprend un bloc d'initialisation commandé par une condition d'initialisation placée à l'extérieur et avant la boucle ;
l'exécution (406), par le système via les un ou plusieurs processeurs matériels, d'une abstraction du programme optimisé pour obtenir un programme simplifié, dans lequel l'exécution de l'abstraction du programme optimisé comprend :
l'attribution, par le système via les un ou plusieurs processeurs matériels, d'une valeur non déterministe à chacune parmi : une ou plusieurs conditions présentes dans la boucle externe du programme optimisé qui lit l'entrée environnementale, et une ou plusieurs attributions présentes dans la boucle externe du programme optimisé qui lit l'entrée environnementale ;
l'exécution (408), par le système via les un ou plusieurs processeurs matériels, d'une analyse d'intervalle à K chemins sur chaque condition d'une ou plusieurs conditions présentes dans une boucle externe du programme simplifié pour obtenir une valeur de vérité d'une condition associée ;
le marquage (410), par le système via les un ou plusieurs processeurs matériels, d'au moins une condition des une ou plusieurs conditions en tant que condition fixe dans la boucle externe du programme simplifié si la valeur de vérité de l'au moins une condition est identifiée comme étant vraie ;
le fait de rendre inconditionnel (412), par le système via les un ou plusieurs processeurs matériels, un chemin vrai de la condition fixe dans le programme simplifié pour obtenir un programme simplifié mis à jour ;
l'abstraction (414), par le système via les un ou plusieurs processeurs matériels, d'une ou plusieurs conditions environnementales présentes dans le programme simplifié mis à jour pour obtenir un programme abstrait, dans lequel les une ou plusieurs conditions environnementales initialisent une ou plusieurs variables avec une entrée environnementale le long d'un parmi un chemin vrai et un chemin faux de sorte qu'un autre chemin qui n'initialise aucune variable soit abstrait ;
la vérification (416), par le système via les un ou plusieurs processeurs matériels, si une abstraction de boucle externe, OLA, est applicable à une boucle externe du programme abstrait en utilisant un algorithme d'identification de boucle externe, dans lequel l'algorithme d'identification de boucle externe est appliqué à la boucle externe du programme abstrait pour vérifier l'éligibilité de la boucle externe pour l'OLA, dans lequel l'algorithme d'identification de boucle externe vérifie si des variables *V*, lues dans la boucle interne, sont des variables environnementales en vérifiant si des définitions atteignant définitivement *D* des variables *V* ont une dépendance ultime sur l'entrée environnementale dans un corps de boucle externe *l_{b}*;
et
l'exécution (418), par le système via les un ou plusieurs processeurs matériels, de l'OLA sur le programme abstrait pour obtenir un programme abstrait de boucle externe, dans lequel le programme abstrait de boucle externe est transmis à un vérificateur de programme pour une vérification de propriété, dans lequel le programme abstrait de boucle externe comprend : a) une pluralité d'énoncés du programme abstrait jusqu'à la boucle externe incluant le bloc d'initialisation, b) un corps de boucle de la boucle externe du programme abstrait, c) une abstraction des une ou plusieurs variables modifiées par la boucle externe abstrait de sorte que le programme abstrait de boucle externe soit une sur-approximation du programme, et d) une supposition sur la négation d'une condition de boucle externe présente dans le programme.

2. Procédé mis en œuvre par processeur (400) selon la revendication 1, dans lequel l'exécution de l'optimisation de boucle du programme reçu comprend :
l'optimisation, par le système via les un ou plusieurs processeurs matériels, de la boucle de la boucle imbriquée présente dans le programme reçu si la boucle comprend la condition d'initialisation, dans lequel la condition d'initialisation est identifiée en utilisant un algorithme d'identification de condition d'initialisation.

3. Procédé mis en œuvre par processeur (400) selon la revendication 1, dans lequel le fait de rendre inconditionnel le chemin vrai de la condition fixe comprend la suppression de la condition fixe tout en gardant un ou plusieurs énoncés présents dans le chemin vrai de la condition fixe.

4. Procédé mis en œuvre par processeur (400) selon la revendication 1, comprenant :
lors de l'identification que la valeur de vérité de la condition est fausse, la suppression, par le système via les un ou plusieurs processeurs matériels, de la condition et d'un chemin vrai de la condition dans le programme simplifié pour obtenir le programme simplifié mis à jour.

5. Procédé mis en œuvre par processeur (400) selon la revendication 1, dans lequel l'abstraction des une ou plusieurs conditions environnementales comprend une ou plusieurs parmi :
1) l'abstraction des une ou plusieurs conditions environnementales présentes dans le programme simplifié mis à jour qui initialise une ou plusieurs variables uniquement avec l'entrée environnementale le long de son chemin vrai de sorte que son chemin faux n'initialise aucune variable ;
2) la suppression d'au moins une condition environnementale des une ou plusieurs conditions environnementales de sorte que l'initialisation des une ou plusieurs variables le long du chemin vrai devienne inconditionnelle ;
3) l'abstraction des une ou plusieurs conditions environnementales présentes dans le programme simplifié mis à jour qui initialise des variables uniquement avec des entrées environnementales le long de son chemin faux, de sorte que son chemin vrai n'initialise aucune variable ; et
4) la suppression d'au moins une condition environnementale des une ou plusieurs conditions environnementales de sorte que l'initialisation des une ou plusieurs variables le long du chemin faux devienne inconditionnelle.

6. Système (102), comprenant :
une mémoire (202) stockant des instructions ;
une ou plusieurs interfaces de communication (206) ; et
un ou plusieurs processeurs matériels (204) couplés à la mémoire (202) via les une ou plusieurs interfaces de communication (206), dans lequel les un ou plusieurs processeurs matériels (204) sont configurés par les instructions pour :
recevoir un programme à vérifier qui réagit à une entrée environnementale, dans lequel le programme comprend une boucle imbriquée, dans lequel la boucle imbriquée se rapporte à une boucle dans une ou plusieurs boucles ;
effectuer une optimisation de boucle du programme reçu pour obtenir un programme optimisé, dans lequel le programme optimisé comprend un bloc d'initialisation commandé par une condition d'initialisation placée à l'extérieur et avant la boucle ;
effectuer une abstraction du programme optimisé pour obtenir un programme simplifié, dans lequel pour effectuer l'abstraction du programme optimisé, les un ou plusieurs processeurs matériels (204) sont configurés par les instructions pour :
attribuer une valeur non déterministe à chacune parmi : une ou plusieurs conditions présentes dans la boucle externe du programme optimisé qui lit l'entrée environnementale, et une ou plusieurs attributions présentes dans la boucle externe du programme optimisé qui lit l'entrée environnementale ;
effectuer une analyse d'intervalle à K chemins sur chaque condition d'une ou plusieurs conditions présentes dans une boucle externe du programme simplifié pour obtenir une valeur de vérité d'une condition associée ;
marquer au moins une condition des une ou plusieurs conditions en tant que condition fixe dans la boucle externe du programme simplifié si la valeur de vérité de l'au moins une condition est identifiée comme étant vraie ;
rendre inconditionnel un chemin vrai de la condition fixe dans le programme simplifié pour obtenir un programme simplifié mis à jour ;
abstraire une ou plusieurs conditions environnementales présentes dans le programme simplifié mis à jour pour obtenir un programme abstrait, dans lequel les une ou plusieurs conditions environnementales initialisent une ou plusieurs variables avec une entrée environnementale le long d'un parmi : un chemin vrai et un chemin faux de sorte qu'un autre chemin qui n'initialise aucune variable soit abstrait ;
vérifier si une abstraction de boucle externe, OLA, est applicable à une boucle externe du programme abstrait en utilisant un algorithme d'identification de boucle externe, dans lequel l'algorithme d'identification de boucle externe est appliqué à la boucle externe du programme abstrait pour vérifier l'éligibilité de la boucle externe pour l'OLA, dans lequel l'algorithme d'identification de boucle externe vérifie si des variables *V*, lues dans la boucle interne, sont des variables environnementales en vérifiant si des définitions *D* atteignant définitivement des variables *V* ont une dépendance ultime sur l'entrée environnementale dans un corps de boucle externe *l_{b'}* ; et
exécuter l'OLA sur le programme abstrait pour obtenir un programme abstrait de boucle externe, dans lequel le programme abstrait de boucle externe est transmis à un vérificateur de programme pour une vérification de propriété, dans lequel le programme abstrait de boucle externe comprend : a) une pluralité d'énoncés du programme abstrait jusqu'à la boucle externe incluant le bloc d'initialisation, b) un corps de boucle de la boucle externe du programme abstrait, c) une abstraction des une ou plusieurs variables modifiées par la boucle externe abstrait de sorte que le programme abstrait de boucle externe soit une sur-approximation du programme, et d) une supposition sur la négation d'une condition de boucle externe présente dans le programme.

7. Système (102) selon la revendication 6, dans lequel pour effectuer l'optimisation de boucle du programme reçu, les un ou plusieurs processeurs matériels (204) sont configurés par les instructions pour :
optimiser la boucle de la boucle imbriquée présente dans le programme reçu si la boucle comprend la condition d'initialisation, dans lequel la condition d'initialisation est identifiée en utilisant un algorithme d'identification de condition d'initialisation.

8. Système (102) selon la revendication 6, dans lequel le fait de rendre inconditionnel le chemin vrai de la condition fixe comprend la suppression de la condition fixe tout en gardant un ou plusieurs énoncés présents dans le chemin vrai de la condition fixe.

9. Système (102) selon la revendication 6, dans lequel les un ou plusieurs processeurs matériels sont configurés par les instructions pour :
lors de l'identification que la valeur de vérité d'une condition est fausse, supprimer la condition et un chemin vrai de la condition dans le programme simplifié pour obtenir le programme simplifié mis à jour.

10. Système (102) selon la revendication 6, dans lequel l'abstraction des une ou plusieurs conditions environnementales comprend une ou plusieurs parmi :
1) l'abstraction des une ou plusieurs conditions environnementales présentes dans le programme simplifié mis à jour qui initialise une ou plusieurs variables uniquement avec l'entrée environnementale le long de son chemin vrai de sorte que son chemin faux n'initialise aucune variable,
2) la suppression d'au moins une condition environnementale des une ou plusieurs conditions environnementales de sorte que l'initialisation des une ou plusieurs variables le long du chemin vrai devienne inconditionnelle,
3) l'abstraction des une ou plusieurs conditions environnementales présentes dans le programme simplifié mis à jour qui initialise des variables uniquement avec des entrées environnementales le long de son chemin faux, de sorte que son chemin vrai n'initialise aucune variable, et
4) la suppression d'au moins une condition environnementale des une ou plusieurs conditions environnementales de sorte que l'initialisation des une ou plusieurs variables le long du chemin faux devienne inconditionnelle.

11. Un ou plusieurs supports de stockage d'informations lisibles par machine non transitoires comprenant une ou plusieurs instructions qui, lorsqu'elles sont exécutées par un ou plusieurs processeurs matériels, amènent :
la réception, par un système, d'un programme à vérifier qui réagit à une entrée environnementale, dans lequel le programme comprend une boucle imbriquée, dans lequel la boucle imbriquée se rapporte à une boucle dans une ou plusieurs boucles ;
l'exécution, par le système, d'une optimisation de boucle du programme reçu pour obtenir un programme optimisé, dans lequel le programme optimisé comprend un bloc d'initialisation commandé par une condition d'initialisation placée à l'extérieur et avant la boucle ;
l'exécution, par le système, d'une abstraction du programme optimisé pour obtenir un programme simplifié, dans lequel l'exécution de l'abstraction du programme optimisé comprend :
l'attribution, par le système, d'une valeur non déterministe à chacune parmi : une ou plusieurs conditions présentes dans la boucle externe du programme optimisé qui lit l'entrée environnementale, et une ou plusieurs attributions présentes dans la boucle externe du programme optimisé qui lit l'entrée environnementale ;
l'exécution, par le système, d'une analyse d'intervalle à K chemins sur chaque condition d'une ou plusieurs conditions présentes dans une boucle externe du programme simplifié pour obtenir une valeur de vérité d'une condition associée ;
le marquage, par le système, d'au moins une condition des une ou plusieurs conditions en tant que condition fixe dans la boucle externe du programme simplifié si la valeur de vérité de l'au moins une condition est identifiée comme étant vraie ;
le fait de rendre inconditionnel, par le système, un chemin vrai de la condition fixe dans le programme simplifié pour obtenir un programme simplifié mis à jour ;
l'abstraction, par le système, d'une ou plusieurs conditions environnementales présentes dans le programme simplifié mis à jour pour obtenir un programme abstrait, dans lequel les une ou plusieurs conditions environnementales initialisent une ou plusieurs variables avec une entrée environnementale le long d'un parmi un chemin vrai et un chemin faux de sorte qu'un autre chemin qui n'initialise aucune variable soit abstrait ;
la vérification, par le système, si une abstraction de boucle externe, OLA, est applicable à une boucle externe du programme abstrait en utilisant un algorithme d'identification de boucle externe, dans lequel l'algorithme d'identification de boucle externe est appliqué à la boucle externe du programme abstrait pour vérifier l'éligibilité de la boucle externe pour l'OLA, dans lequel l'algorithme d'identification de boucle externe vérifie si des variables *V*, lues dans la boucle interne, sont des variables environnementales en vérifiant si des définitions *D* atteignant définitivement des variables *V* ont une dépendance ultime sur l'entrée environnementale dans un corps de boucle externe *l_{b'}* ; et
l'exécution, par le système, de l'OLA sur le programme abstrait pour obtenir un programme abstrait de boucle externe, dans lequel le programme abstrait de boucle externe est transmis à un vérificateur de programme pour une vérification de propriété, dans lequel le programme abstrait de boucle externe comprend : a) une pluralité d'énoncés du programme abstrait jusqu'à la boucle externe incluant le bloc d'initialisation, b) un corps de boucle de la boucle externe du programme abstrait, c) une abstraction des une ou plusieurs variables modifiées par la boucle externe abstrait de sorte que le programme abstrait de boucle externe soit une sur-approximation du programme, et d) une supposition sur la négation d'une condition de boucle externe présente dans le programme.
